# EUROPEAN PATENT APPLICATION

(11) **EP 4 250 134 A1**
(43) Date of publication of application: **27.09.2023**
(21) Application number: 22163586.5
(22) Date of filing: 22.03.2022
(51) Int. Cl.: G06F 16/638, G06F 16/683, G06N 3/02, G06N 3/04

(54) **SYSTEM AND METHOD FOR AUTOMATED MUSIC PITCHING**

(71) Applicant: Sparwk AS, 7010 Trondheim (NO)
(72) Inventor: Choi, Jin Suk, 10390 Goyang, Gyeonggi (KR); Jenssen, Robin, 111 37 Stockholm (SE); Liang, Beici, 7014 Trondheim (NO)
(74) Representative: Onsagers AS

(57) **Abstract**

A method and system providing automated music pitching of pitching candidates, selected from registered musical works, to be included in a music project request, where the musical works comprises metadata, text-based tags of musical attributes and corresponding audio files that are stored and made available in a music retrieval module 230, the method is executed in a music pitching system 110 running on a computing device 100.

In implementations of pitching musical works, a music pitching system receives a project request from a music industry professional, and then selects multiple works registered by different creators to form a pitch-list that matches the request. A project request can include text data to describe targeted musical attributes (genre, mood, etc.) and one or more audio recordings as reference songs. The music pitching system includes trained neural networks to generate feature vectors of text-based tags of musical attributes and audio contents respectively. The music pitching system can then compare the feature vectors of the project request to the feature vectors that correspond to different musical works, and determine musical works to form the pitch-list for the project based on similarity measurements of the feature vectors.

## Description

### TECHNICAL FIELD

The present disclosure relates to a system and method for processing of music related content by neural networks, and more specifically to automatically pitching music matching a project request.

### BACKGROUND

Music publishers, record labels and other music industry professionals are actively on the lookout for musical works that match their needs. These professionals are present from the beginning of the creative process, and in many cases, initiate projects with specific requests. Songwriters, composers, and other creators can pitch their works to potential projects. Artists and repertoire (abbreviated to A&R) executives will analyse the pitched works to determine if they fit what the projects are looking for. If a musical work matches the requests of a project, the work will be selected into a pitch-list, which is then sent to the respective party for consideration.

Many barriers exist between a musical work and having the work selected into a pitch-list, listing musical works matching a project request. Project requests may not be publicly available, and creators may not have access to pitch their works directly to a project. Moreover, A&R executives have plenty of musical works to review every day and works from new and independent songwriters and composers may hardly stand out. To facilitate the music pitching process in a more objective and efficient way, a novel system that can automatically form a pitch-list, which consists of music works that are discovered from a large database and match the requests of a project, is needed and will benefit the whole music industry.

Given the fact that most music industry professionals would not pay attention to unsolicited works, creators and their works could reach professionals through online platforms such as TAXI [www.taxi.com] and SubmitHub [www.submithub.com], or events like Song:Expo [www.songexpo.no]. Current status of music pitching relies on human reporting and review, for which no technological solution is yet a complete substitute.

Relevant technologies that can contribute to automated music pitching systems are methods for music searching. Music search engines enable users to explore music collections to meet their needs in a flexible and intuitive way.

Traditional search engines can search for music based on text-based tags of a music file, such as genres and moods. However, matching text-based tags lacks specificity in music, which leads to perceptual dissimilarity in other aspects characterising music, e.g. attributes such as tonality and rhythm. In the case that such textual descriptions are incomplete or not available, one requires content-based retrieval strategies which utilise the raw audio material. These strategies usually follow the query-by-example paradigm, i.e. given an audio query, the task is to retrieve all songs that are somehow similar or related to the query. However, the same piece of music as the audio query is usually returned. This is because audio fingerprints or watermarks that obtain high specificity in music are used for searching, such as the music recognition system described in US 6990452 B2. Accordingly, traditional technologies in existing music search engines, which obtain either too low or too high specificity in music, cannot be directly used for music pitching. Musical works to form the pitch-list should both obtain similar tags declared in the project request and be perceptually similar but not the same as the reference audio files given in the project request.

With the development of artificial intelligence, deep neural networks have been used to analyse the audio content and generate feature vectors to represent different characteristics of music. A feature vector is an n-dimensional vector of numerical features representing different characteristics of an object, in the present case the object is music.

These feature vectors can obtain an intermediate level of music specificity. Therefore, they can be used to search for similar music for replacement, ref.: Lee, Jongpil, et al. "Disentangled multidimensional metric learning for music similarity." International Conference on Acoustics, Speech and Signal Processing (ICASSP). IEEE, 2020. Feature vectors can also be used for music recommendation, ref.: Liang, Beici, et al. "Learning audio embeddings with user listening data for content-based music recommendation." International Conference on Acoustics, Speech and Signal Processing (ICASSP). IEEE, 2021. There is however no existing system and method adapted for music pitching tasks.

### SHORT DESCRIPTION

The invention is defined by a method providing automated music pitching of pitching candidates, selected from registered musical works, to be included in a music project request, where the registered musical works comprise metadata, text-based tags of musical attributes and corresponding audio files that are stored and made available in a music retrieval module, the method is executed in a music pitching system running on a computing device. The method comprises:
- receiving, via a user interface module, input data comprising text-based tags of musical attributes and reference music characterizing requested musical works to be included in the music project request;
- generating, in a text neural network module, text feature vectors of the musical attributes of the musical works included in the pitching candidates and of the requested musical works;
- generating, in an audio neural network module, audio feature vectors of the audio contents of the musical works included in the pitching candidates and of the requested musical works;
- comparing, in a candidate generation module, the generated text feature vectors of the requested musical works to the generated text feature vectors of the musical works included in the pitching candidates;
- deriving a list of sorted pitching candidates by sorting the compared text feature vectors according to degree of similarity between text feature vectors of the requested musical works and of the pitching candidates;
- comparing, in a distance module, the audio feature vectors of the requested musical works with the audio feature vectors of the musical works in the list of sorted pitching candidates;
- deriving a final pitch-list according to determined distances, over the audio vector space, of the audio feature vectors of the musical works in the sorted list of pitching candidates, and
- presenting, on the user interface, a final list of musical works to be included in the musical project request.

The above listed steps are not necessarily performed in the order listed. Audio feature vectors may for instance be generated prior to the text feature vectors, or at the same time, i.e. by parallel processing.

In one embodiment, the user interface module is implemented to generate and display a user interface on the computing device. The user interface module may comprise a touch screen displaying different text-based tags of music attributes that can be activated to input corresponding input data to the computing device. Input data can also be provided by other known means such as via a point-and-click device, keyboard, or speech.

In one embodiment, the text-based tags of musical attributes are user-generated, e.g. input via a touch screen. In another embodiment, the tags are computer generated by executing an algorithm analysing musical work.

According to one embodiment, the text neural network module is adapted to concatenate multiple text feature vectors, each defining different characterising aspects of musical attributes, to a single text feature vector representing all characteristics. By concatenating multiple feature vectors into a single one, musical attributes of each musical work are collectively represented by a feature vector with a fixed number of dimensions. This contributes to a more efficient similarity search in a large-scale database.

According to one embodiment, a selection of information characterising the final pitch-list of musical works to display on the computing device is determined. The selection of information is input via the interface module. This may for instance be number of pitching candidates to be included in the final pitch-list, minimum and maximum distance between feature vectors, and how to present the list of pitchcandidates.

According to one embodiment, musical work presented on the user interface is selected and played on a loudspeaker connected to the computing device.

The invention is also defined by a computer program product that when executed by a computing device performs the method above for providing automated music pitching of pitching candidates, selected from registered musical works, to be included in a music project request, where the musical works comprises metadata, text-based tags of musical attributes and corresponding audio files that are stored and made available in a music retrieval module.

The present invention is further defined by a music pitching system providing automated music pitching of pitching candidates, selected from registered musical works, to be included in a music project request, where the musical works comprises metadata, text-based tags of musical attributes and corresponding audio files made available in a music retrieval module.

The system comprises a computing device adapted for performing the automated music pitching when executing a music pitching program, and further comprises:
- a user interface module receiving input data comprising text-based tags of musical attributes and reference music characterizing requested musical works to be included in the music project;
- a text neural network module generating text feature vectors of the musical attributes of the musical works included in the pitching candidates and the requested musical works;
- an audio neural network module generating audio feature vectors of the audio contents of the musical works included in the pitching candidates and the requested musical works;
- a candidate generation module comparing the generated text feature vectors of the requested musical works to the generated text feature vectors of the musical works included in the pitching candidates and deriving a list of sorted pitching candidates by sorting the compared text features vectors according to degree of similarity between text feature vectors of the requested musical works and of the pitching candidates;
- a distance module comparing the audio feature vectors of the requested musical works with the audio feature vectors of the musical works in the list of sorted pitching candidates, and deriving a final pitching list according to determined distances, over the audio vector space, of the audio feature vectors of the musical works in the sorted list of pitching candidates, and
- a user interface, presenting a final list of musical works to be included in the musical project request.

### DETAILED DESCRIPTION

The invention will now be described by examples and with reference to the accompanying figures illustrating an embodiment of the invention. These figures are provided to facilitate the understanding of the disclosed technology and shall not be considered limiting of the breadth, scope, or applicability thereof.
Figure 1 illustrates a digital medium environment in an example implementation that is operable to employ techniques described herein.
Figure 2 illustrates an example system with different modules for obtaining a pitch-list from registered works for a given music project request in accordance with one or more aspects of the disclosure.
Figure 3 illustrates a flow diagram depicting an example procedure in accordance with the generation of pitch candidates by comparing text feature vectors.
Figure 4 illustrates a flow diagram depicting an example procedure in accordance with the generation of pitch-list from candidates by comparing audio feature vectors.

The following terms are used throughout the disclosure. The descriptions of these terms are by way of example, and not limitation.

Music project - describes a collection of requests by music industry professionals, such as music publishers, record labels, and the like, who look for musical works that match the requests. A music project can include reference music and requests on musical attributes.

Musical work - describes the underlying music composition, comprising music and lyrics created by creators, such as songwriters, composers, and so on. During the registration of a musical work, corresponding metadata, musical attributes, audio recordings, and other related information are stored.

Pitch candidates - are a plurality of musical works that match general requests in a music project.

Pitch-list - is a list of musical works to be pitched to a music project. These musical works are selected from pitch candidates.

Reference music - describes one or more music tracks provided by a project creator. Corresponding audio contents of the music tracks can be loaded into a music pitching system to search for musical works that are perceptually similar to the reference music.

Metadata - for music is a collection of information that pertains to a music entity. Metadata can include descriptive information, which details the contents of a track, such as the title, album, track number, and so on. Metadata can also include ownership information, which details the creators, their corporate partners, the contractual terms agreed by them, and so on.

Musical attribute - describes any suitable characteristic of music that can be used to classify a music entity such as a music project, a musical work, and a music file. Examples of musical attribute include genre (e.g. rock, jazz, etc.), mood (e.g. happy, sad, etc.), tonality (e.g. key, scale, etc.), rhythm (e.g. tempos in beat per minute, or levels of perceived tempos such as slow, medium, fast, etc.), vocal (e.g. female, male, etc.), instrument (e.g. piano, guitar, etc.), and the like.

Text feature vector - describes a vector generated from text-based tags of musical attributes that represents semantic meanings of text information. A text feature vector can be generated with a text-based neural network that processes tags of an aspect of musical attributes, such as tags related to genres, and generates the text feature vector in a vector space.

Audio feature vector - describes a vector generated from a music file that represents low-level characteristics of music content. An audio feature vector can be generated with an audio-based neural network that processes a time sequence of a music file, e.g. a waveform, or a two-dimensional representation of the music file, e.g. a spectrogram, and generates the audio feature vector in a vector space.

Vector space - describes a space in which vectors of real-valued numbers, such as audio feature vectors of music files, belong. A vector of a vector space can be added to another vector in the vector space, and the result belongs to the vector space. A vector of a vector space can also be multiplied by a real-valued scalar, and the result belongs to the vector space. The vector space can include any suitable number of dimensions.

Distance - describes a norm of a difference between feature vectors. It indicates a degree of similarity between music projects and musical works represented by the feature vectors.

Distance similarity threshold - describes a threshold that can be used to determine if a musical work matches the requests of a music project.

The present invention describes systems, devices, and techniques for forming a pitch-list from musical works according to requests provided in a music project. As discussed above, existing processes for music pitching involve A&R executives reviewing a large collection of musical works. This is a challenge because the task is time consuming, and error-prone due to the subjectivity of personal aesthetics. The embodiments described herein automate the process of pitching a musical work to a project based on objective measurements of how the musical work matches the project requests.

The following non-limiting example is provided to present a certain embodiment of the invention. In this example, a music pitching system can access a music project with specific requests, and musical works to be pitched. The music pitching system can provide a user interface to the music industry professionals for creating a project, which requests the musical attributes that should be obtained by the musical works in the pitch-list, and provides one or more songs as references.

The music pitching system can also provide a user interface to the music creators for musical works registration, which can upload audio recordings and store metadata, tags of musical attributes and other related information. The tags of musical attributes can be user-generated, i.e. specified by a user, or algorithmically generated, such as tags that are generated by an audio analysis algorithm, such as a tempo estimation algorithm, a genre classifier, and the like.

The music pitching system in this example uses trained text-based neural networks to generate candidates for the pitch-list from a large collection of musical works. The music pitching system provides musical attributes requested by a project to the text-based neural networks to obtain the text feature vectors, which are compared to the text feature vectors corresponding to the musical attributes of musical works that have been stored in the database. The music pitching system can determine the distance between the text feature vectors of musical attributes, and return the pitch candidates consisting of the musical works that correspond to the smallest distances, such as the top-ten musical works having the ten smallest distances. Additionally, or alternatively, the music pitching system can return the pitch candidates consisting of the musical works corresponding to respective distances that are less than a distance similarity threshold. The threshold is a floating-point number which ranges from zero to one. The threshold value can be pre-set by the music pitching system, and/or adjusted via the user interface.

Distance between feature vectors of different musical works is determined by estimating the difference in numerical representations of similar musical attributes of the feature vectors.

In this example, the text-based neural networks were trained with a large corpus of text especially in the musical context to learn word associations. Tags of musical attributes can be represented as respective text feature vectors. Distances between the text feature vectors indicate semantic similarity between the tags represented by these vectors. Therefore, text feature vectors can handle plural forms (guitar and guitars), synonyms (happy and cheerful), acronyms (edm and electronic dance music), dialectal forms (brazil and brasil), and the like in tags of musical attributes.

From the pitch candidates, the music pitching system determines the final pitch-list using trained audio-based neural networks. The music pitching system provides audio recordings of the reference songs specified in the project requests to the audio-based neural networks to obtain the audio feature vectors, which are compared to the audio feature vectors corresponding to audio recordings of the musical works in the pitch candidates. The music pitching system can determine the distance between the audio feature vectors of audio recordings to return the final pitch-list. According to the number of musical works to be pitched to a project, for instance five, the top-five musical works having the five smallest distance in the pitch candidates form the final pitch-list for the project.

In the above example, the audio-based neural networks were trained to analysis the subjective information (e.g., genre, mood, etc.), objective information (e.g., vocal, instrument, etc.), and harmonic progression from audio recordings of musical works, and represent these aspects of audio contents as respective audio feature vectors. Distances between the audio feature vectors indicate the perceptually similarity between the music represented by these vectors. The audio feature vectors provide a music representation of higher specificity than the text feature vectors and are therefore used to narrow down the musical works to be pitched from the candidates which are generated using the text feature vectors.

In the following discussion, an example digital medium environment is described that may employ the techniques described herein. Example implementation details and procedures are then described which may be performed in the example digital medium environment as well as in hardware environments, firmware, software, or a combination thereof.

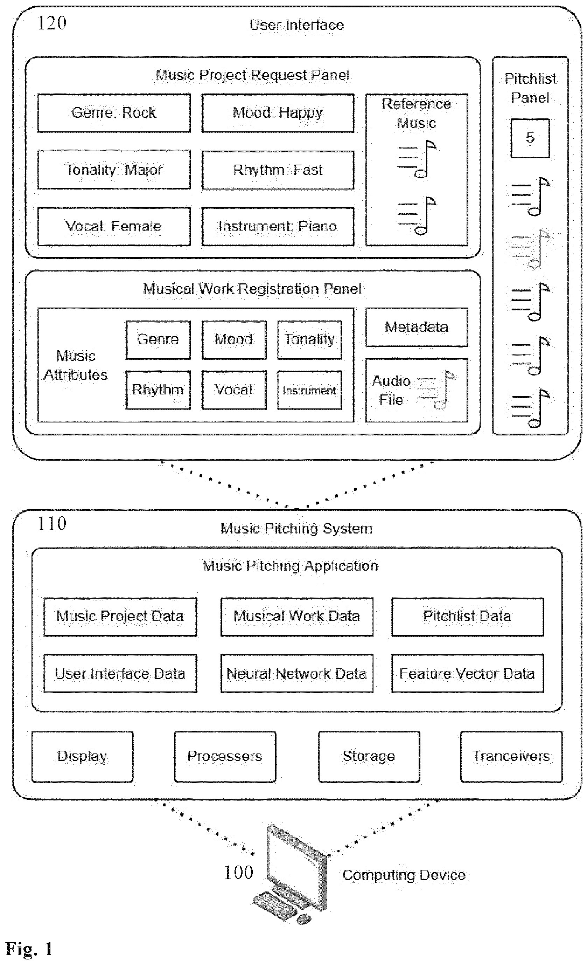

Figure 1 illustrates a digital medium environment in an example implementation that is operable to employ techniques described herein. As used herein, the term "digital medium environment" refers to the various computing devices and resources that can be utilised to implement the techniques described herein. The illustrated digital medium environment includes a computing device depicted as a desktop computer, which is an example computing device. The computing device can generally include any suitable type of computing device with memory and processor resources. The computing device comprises a music pitching system. The music pitching system can generate a user interface that is displayable on a display device of the computing device.

The user interface includes a music project request panel for configuring project requests that should be matched by the musical works pitched to the project. The music project request panel includes a musical attributes panel for configuring different aspects of musical attributes to generate pitch candidates. The musical attributes panel can display the configurations. In the example in Figure 1, a user has configured six aspects of musical attributes in the musical attributes panel, including genre as rock, mood as happy, tonality as major, rhythm as fast, vocal as female, and instrument as bass. The music project request panel also includes a reference music panel, which is one or more examples of music files that can be loaded into the music pitching system as references. The user interface can display any suitable representation of the reference music, such as a waveform, a spectrogram, etc.

The user interface also includes a musical work registration panel for registering a new musical work that will be pitched to matched projects. The musical work registration panel includes a metadata panel for logging and displaying general ownership metadata and descriptive metadata of the musical work, and an audio file panel for uploading and displaying the corresponding audio file uploaded by the user. The musical work registration panel also includes a musical attributes panel for describing different aspects of musical attributes of the musical work. The musical attributes panel can display tags of musical attributes that are user-generated, or algorithmically generated by audio analysis algorithms. In the example in Figure 1, a musical work has been registered with the metadata, one audio file, and six aspects of musical attributes, including genre, mood, tonality, rhythm, vocal and instrument.

Based on the music project requests, the user interface can display a pitch-list panel for displaying musical works that match the requests. In the example in Figure 1, since a user has instructed the music pitching system to return a pitch-list of five songs, the pitch-list panel displays representations of five musical works, including the newly registered musical work as the second one. A user can select any of these musical works and play the audio file of the selected work through a loudspeaker of the computing device.

The music pitching system includes a display, which can expose any suitable data used by or associated with the music pitching system. For example, the display can display the user interface mentioned above. The music pitching system also includes processors, which can include any suitable type of processor. The music pitching system can be implemented by executing the instructions stored in storage on the processors. The storage can be any suitable type of storage accessible by or included in the music pitching system. The music pitching system also includes transceivers, which can be implemented to transmit and receive data using any suitable type and number of communication protocols.

The music pitching system also includes the music pitching application that represents functionality configured to pitch musical works to music projects based on the project requests. The music pitching application can be implemented as any type of module or component in any type of computing device. The music pitching application can include or have access to any suitable data for music pitching, including music project data, musical work data, pitch-list data, user interface data, neural network data (e.g., architecture definitions of a neural network, activation functions, and the like), and feature vector data (e.g., text feature vector of a musical attribute, audio feature vector of the harmonic progression in a music file, and the like).

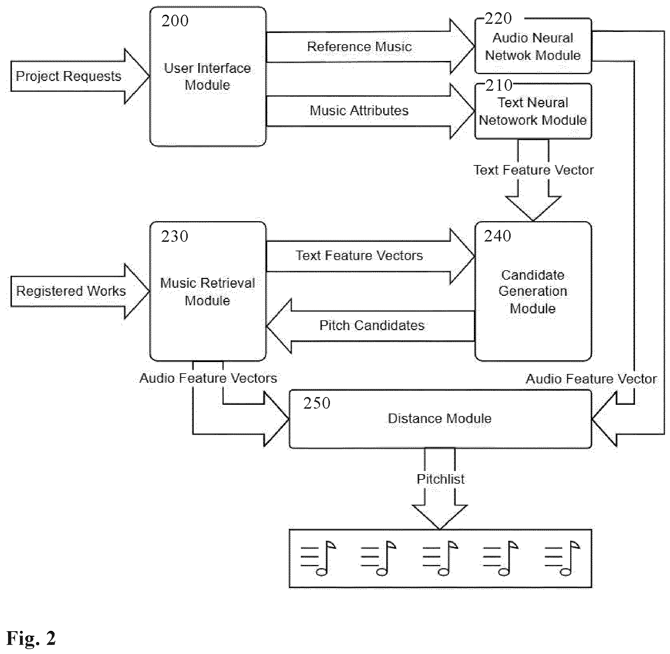

Figure 2 illustrates an example of a music pitching system for obtaining a pitch-list from registered works for a given music project request in accordance with one or more aspects of the disclosure. In this implementation, the system includes user interface module 200, text neural network module 210, audio neural network module 220, music retrieval module 230, candidate generation module 240, and distance module 250. These modules can be implemented as any type of module or component in any type of computing device. The system here is one example of the music pitching system in Figure 1 that can be constructed using these modules.

The user interface module 200 can be implemented to generate and display a user interface 120. The user interface 120 in Figure 1 is an example of a user interface 120 generated by the user interface module 200. The user interface module 200 can receive and display project requests input via the user interface 120, including a user selection of musical attributes for which a user would like the musical works in the pitch-list to obtain, and a user selection of reference music for which the user would like the pitched musical works to be perceptually similar to.

The text neural network module 210 can be implemented to generate a text feature vector for the text-based tags of musical attributes. The text neural network module 210 can include a trained text-based neural network to generate feature vectors. In one example, the text neural network module 210 generates a text feature vector by concatenating multiple feature vectors of different aspects of musical attributes. For example, six feature vectors can be respectively obtained from the trained text-based neural network for six aspects of musical attributes including genre, mood, tonality, rhythm, vocal, and instrument. They are then concatenated into one vector as the text feature vector. The text neural network module 210 can provide the text feature vector corresponding to the music project requests on musical attributes to the candidate generation module.

The audio neural network module 220 can be implemented to generate an audio feature vector for an audio file. The audio neural network module 220 can include trained audio-based neural networks to generate feature vectors. In one example, the audio neural network module 220 generates a feature vector of one audio file by concatenating multiple feature vectors of different aspects of music content. For example, three feature vectors can be respectively obtained from three trained audio-based neural networks for objective information, subjective information, and harmonic progression. They are then concatenated into one vector as the audio feature vector. The audio neural network module 220 can provide the audio feature vector corresponding to the reference song in the music project requests to the distance module 250. In an example the project requests can include multiple reference songs. In this case, the audio neural network module 220 can generate respective audio feature vectors for the multiple reference songs and determine a single audio feature vector for the project from an average of the respective audio feature vectors for the multiple reference songs. The audio neural network module 220 can then provide the single audio feature vector to the distance module 250.

The music retrieval module 230 can be implemented to obtain registered musical works and feature vectors of the musical works, such as from a database of musical works and feature vectors of the musical works. Additionally or alternatively, the music retrieval module 230 can obtain the feature vectors of the registered musical works by providing the corresponding musical attributes to the text neural networks module 210, and the corresponding audio files to the audio neural network module 220, which can then generate text and audio feature vectors for the registered musical works and provide the generated feature vectors to the music retrieval module 230. The musical works obtained by the music retrieval module 230 are examples of registered musical works that the system can search over to pitch the works that match the project requests. The music retrieval module 230 can provide the text feature vectors for the registered musical works to the candidate generation module 240, and the audio feature vectors for the registered musical works to the distance module 250.

The candidate generation module 240 can be implemented to determine distances between text feature vectors, such as distances between the text feature vector for the project requests and text feature vectors for the registered musical works. Hence the candidate generation module 240 can receive the text feature vector for the project requests on musical attributes from the text neural network module 210, and the text feature vectors from the music retrieval module 230. The candidate generation module 240 can determine the distances over the text vector space and indicate a list of the registered musical works that obtain similar musical attributes to the project requests.

The music retrieval module 230 can receive the distances from the candidate generation module 240 and provide registered musical works as pitch candidates based on the distances received from the candidate generation module 250. The music retrieval module 230 can determine the musical works to return as pitch candidates based on the distances in any suitable way, such as by, ranking the distances, comparing the distances to a threshold, etc.

The distance module 250 can be implemented to determine distances between audio feature vectors, such as distances between the audio feature vector for the project requests and audio feature vectors for the musical works in the pitch candidates. Hence, the distance module 250 can receive the audio feature vector for the reference files from the audio neural network module 220, and the audio feature vectors from the music retrieval module 230. The distance module 250 can determine the distances over the audio vector space and select musical works with the smallest distances to form the final pitch-list. In the example illustrated in Figure 2, the distance module 250 can determine the musical works from the pitch candidates that are closest to the reference music based on the top-five distances with the smallest values, and return these musical files to form the pitch-list.

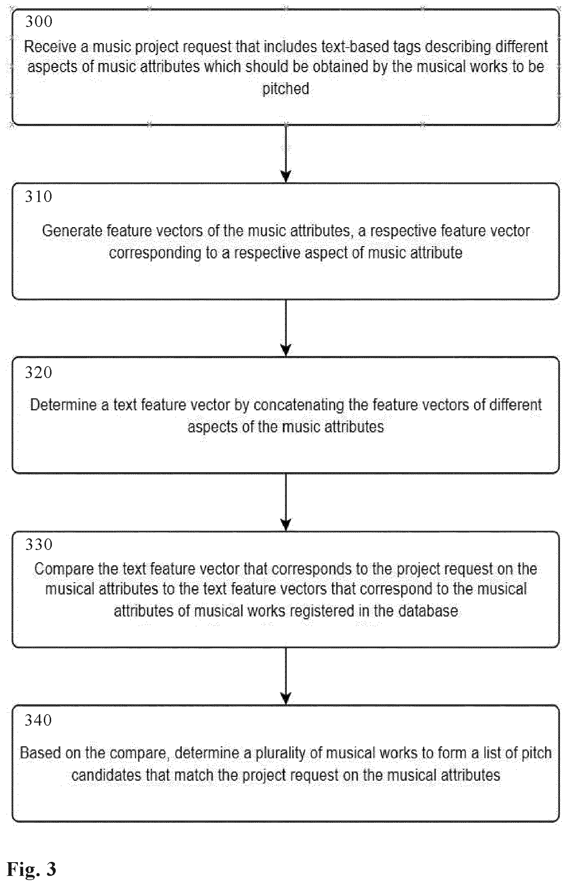

Figure 3 illustrates a flow diagram depicting an example procedure in accordance with the generation of pitch candidates by comparing the text feature vectors. The first step 300 of the procedure is receiving a music request that includes text-based tags describing different aspects of music attributes which should be obtained by the musical works to be pitched. The next step 310 is to generate text feature vectors of the music attributes according to the method described above, where a respective feature vector corresponds to a respective aspect of music attributes.

In one embodiment, the multiple text feature vectors are concatenated to a single text feature vector representing all characteristics, as illustrated in step 320 in the figure. The next step 330 is to compare a text feature vector corresponding to a project request on the musical attributes to the text feature vectors that correspond to the musical attributes of musical works stored in the musical retrieval module 240. Based on the comparison in step 330, the next step 340 is to determine a plurality of musical works to be included in a candidate pitch list, i.e. musical works that match the project request in view of the musical attributes.

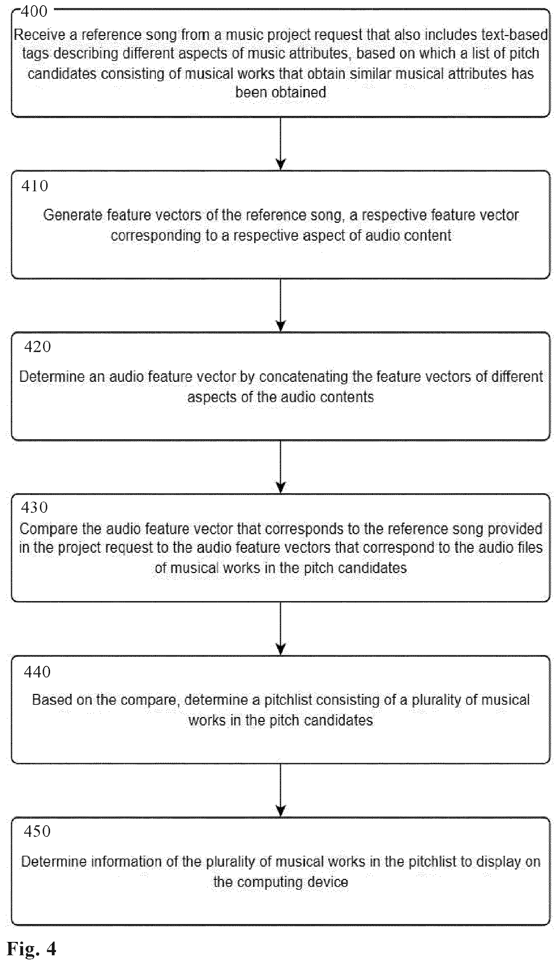

Figure 4 illustrates a flow diagram depicting an example procedure in accordance with the generation of pitch-list from candidates by comparing the audio feature vectors. The first step 400 of the procedure is receiving reference music, e.g. one or more reference songs for the musical project request, that includes text-based tags describing different aspects of music attributes which should be obtained by the musical works to be pitched. The next step 410 is to generate feature vectors of the reference music, where a respective feature vector corresponds to a respective aspect of audio content. The next step 420 is to derive a single audio vector by concatenating the feature vectors of different aspects of the audio content. Then in step 430, the audio feature vector that corresponds to the one or more reference songs provided in the project request is compared to the audio feature vectors that correspond to the audio files of musical works in the pitch candidates. Following the comparison in step 430, a final pitch-list is determined in step 440 consisting of a plurality of musical works selected from the pitch candidates. In the last step 450, information related to the musical works listed in the final pitch-list to display on the computing device 100 is determined.

Aspects of the procedures illustrated in Figure 3 and 4 may be implemented in hardware, firmware, software, or a combination thereof. The procedure is illustrated as a set of blocks that specify operations performed by one or more devices and are not necessarily limited to the orders shown for performing the operations by the respective blocks. The procedure may be performed in a digital medium environment by a suitably configured computing device, such as the computing device described with reference to Figure 1 that makes use of a music pitching system, such as the system described with reference to Figure 2.

A music pitching system implementing procedures illustrated in Figure 3 and 4 may be an independent application that has been installed on the computing device, a service hosted by a service provider that is accessible by the computing device, a plug-in module to the computing device, or combinations thereof.

As understood from the disclosure of the invention, the provided method and system for automatically pitching music is time efficient and results in a pitch-list of musical works with similar tags declared in a project request and that is perceptually similar to but not the same as the reference audio files provided in the project request. Providing a pitch-list with similar relevance, was previously done manually by listening to and sorting out less relevant musical works.

## Claims

1. A method providing automated music pitching of pitching candidates, selected from registered musical works, to be included in a music project request, where the registered musical works comprise metadata, text-based tags of musical attributes and corresponding audio files that are stored and made available in a music retrieval module (230), the method is executed in a music pitching system (110) running on a computing device (100), the method comprises:
- receiving, via a user interface module (200), input data comprising text-based tags of musical attributes and reference music characterizing requested musical works to be included in the music project request;
- generating, in a text neural network module (210), text feature vectors of the musical attributes of the musical works included in the pitching candidates and of the requested musical works;
- generating, in an audio neural network module (220), audio feature vectors of the audio contents of the musical works included in the pitching candidates and of the requested musical works;
- comparing, in a candidate generation module (240), the generated text feature vectors of the requested musical works to the generated text feature vectors of the musical works included in the pitching candidates;
- deriving a list of sorted pitching candidates by sorting the compared text feature vectors according to degree of similarity between text feature vectors of the requested musical works and of the pitching candidates;
- comparing, in a distance module (250), the audio feature vectors of the requested musical works with the audio feature vectors of the musical works in the list of sorted pitching candidates;
- deriving a final pitch-list according to determined distances, over the audio vector space, of the audio feature vectors of the musical works in the sorted list of pitching candidates, and
- presenting, on the user interface (120), a final list of musical works to be included in the musical project request.

2. The method according to claim 1, where the user interface module (120) is implemented to generate and display a user interface on the computing device (100).

3. The method according to claim 1 or 2, where the text-based tags of musical attributes are user-generated and/or computer generated by executing an algorithm.

4. The method according to any of the previous claims, where the text neural network module (210) is adapted to concatenate multiple text feature vectors, each defining different characterising aspects of musical attributes, to a single text feature vector representing all characteristics.

5. The method according to any of the previous claims, where the audio neural network module (220) is adapted to concatenate multiple audio feature vectors, each defining different characterising aspects of the audio, to a single audio feature vector representing all characteristics.

6. The method according to any of the previous claims, by determining a selection of information characterising the final pitch-list of musical works to display on the computing device (100).

7. The method according to any of the previous claims, where a selected musical work presented on the user interface (120) is played on a loudspeaker connected to the computing device.

8. A music pitching system providing automated music pitching of pitching candidates, selected from registered musical works, to be included in a music project request, where the musical works comprises metadata, text-based tags of musical attributes and corresponding audio files made available in a music retrieval module (230), the system comprises a computing device (100) adapted for performing the automated music pitching when executing a music pitching program, the system further comprises:
- a user interface module (200) receiving input data comprising text-based tags of musical attributes and reference music characterizing requested musical works to be included in the music project;
- a text neural network module (210) generating text feature vectors of the musical attributes of the musical works included in the pitching candidates and the requested musical works;
- an audio neural network module (220) generating audio feature vectors of the audio contents of the musical works included in the pitching candidates and the requested musical works;
- a candidate generation module (240) comparing the generated text feature vectors of the requested musical works to the generated text feature vectors of the musical works included in the pitching candidates and deriving a list of sorted pitching candidates by sorting the compared text features vectors according to degree of similarity between text feature vectors of the requested musical works and of the pitching candidates;
- a distance module (250) comparing the audio feature vectors of the requested musical works with the audio feature vectors of the musical works in the list of sorted pitching candidates, and deriving a final pitch-list according to determined distances, over the audio vector space, of the audio feature vectors of the musical works in the sorted list of pitching candidates, and
- a user interface (120), presenting a final list of musical works to be included in the musical project request.

9. A computer program product that when executed by a computing device (100) performs the method according to claims 1 to 7 for providing automated music pitching of pitching candidates, selected from registered musical works, to be included in a music project request, where the musical works comprises metadata, text-based tags of musical attributes and corresponding audio files that are stored and made available in a music retrieval module (230).
